# EUROPEAN PATENT SPECIFICATION

(11) **EP 1 503 967 B1**
(45) Date of publication and mention of the grant of the patent: **24.04.2013**
(21) Application number: 03730196.7
(22) Date of filing: 06.05.2003
(51) Int. Cl.: C03C 17/34, C03C 17/36

(54) **TRANSPARENT SUBSTRATE COMPRISING A CONDUCTIVE LAYER**
DURCHSICHTIGES SUBSTRAT MIT EINER LEITENDEN SCHICHT
SUBSTRAT TRANSPARENT COMPRENANT UNE COUCHE CONDUCTRICE

(30) Priority: 06.05.2002 EP 02076779
(43) Date of publication of application: 09.02.2005
(73) Proprietor: AGC Glass Europe, 1170 Bruxelles (Watermael-Boitsfort) (BE)
(72) Inventor: HEVESI, Kadosa, GLAVERBEL - Centre R & D, B-6040 Jumet (BE)
(74) Representative: Bayot, Daisy
(86) International application number: PCT/EP2003/050144
(87) International publication number: WO 2003/093185

(56) References cited:
- EP-A- 0 507 236
- EP-A1- 0 350 362
- WO-A-01/09052
- WO-A1-00/27771
- WO-A1-01/28949
- US-A- 3 655 545
- US-A- 5 756 192
- JAGER S ET AL: "Optical and electrical properties of doped zinc oxide films prepared by ac reactive magnetron sputtering" JOURNAL OF NON-CRYSTALLINE SOLIDS, NORTH-HOLLAND PHYSICS PUBLISHING. AMSTERDAM, NL, vol. 218, 1 September 1997 (1997-09-01), pages 74-80, XP004095556 ISSN: 0022-3093 cited in the application
- JAGER S ET AL: "Optical and electrical properties of doped zinc oxide films prepared by ac reactive magnetron sputtering", JOURNAL OF NON-CRYSTALLINE SOLIDS, NORTH-HOLLAND PHYSICS PUBLISHING. AMSTERDAM, NL, vol. 218, 1 September 1997 (1997-09-01), pages 74-80, XP004095556, ISSN: 0022-3093, DOI: 10.1016/S0022-3093(97)00288-3

## Description

The present invention relates to a transparent substrate, in particular made of glass, covered with an arrangement of layers comprising at least one conductive transparent layer deposited by a vacuum process. The invention also relates to a process for the production of such a covered substrate, its uses as electrodes and in a heating glazing unit as well as the glazing obtained.

To enable it to be used as heating glazing, in particular in the automotive field, the substrate must be resistant to the tempering processes and mechanical deformations necessary for shaping (bending) windscreens, rear lights, and other automobile windows. The temperatures reached during these treatments are in the order of 650°C, even up to 680°C. It is additionally important that the covered substrate is properly weatherproof, and the layered arrangement must be able to withstand exposure to the ambient atmosphere and to various cleaning detergents as well as to mechanical stresses such as friction or scratching.

Use of a substrate covered with a conductive layer functioning as an electrode is also known for the production of, e.g., photovoltaic and electrochromic cells. In the production processes of some of these products, the conductive layer is subjected to elevations in temperature or chemical actions which can damage the conductive layer. Document US 5,512,107 describes solar cells using a zinc oxide-based conductive layer. The problem of the stability of conductive layers at elevated temperatures and in humidity is mentioned. In this document the conductive and photoactive layers are shaped in narrow strips.

Metal oxide-based semi-conductive layers for antistatic use intended for the prevention of the undesirable effects associated with the accumulation of electrostatic charges are known. The conductivity of these layers is low. Their sheet resistance reaches values in the order of 10⁵ ohm/square. (EP 229 509).

Transparent conductive and low-emissive layers deposited by pyrolysis (liquid or vapour phase) such as tin oxide doped with fluorine, SnO₂:F, or doped with antimony, SnO₂:Sb, are known. However, the conductivity of these layers is not adequate to render them effective as heating layer or as an electrode, since their sheet resistance is generally higher than 60 Ω/□.

The deposition processes using pyrolysis pose the following disadvantages: poor production flexibility, they are in fact linked to a glass line production plant; the number of layers that may be deposited is more limited than by the vacuum process; they do not allow as large a diversity of materials to be deposited as with vacuum processes.

Methods of depositing zinc oxide layers doped with Al or In (ZnO:Al or ZnO:In) by sputtering are known (B.Szyszka et al.: "Optical and electrical properties of doped zinc oxide films prepared by ac reactive magnetron sputtering", J. of Non-Crystalline Solids 218). The layers deposited in this manner have resistivities in the order of 3 or 4.10⁻⁴ ohm.cm.
These layers are not resistant to chemical attacks associated with ageing, nor attacks associated with a supplementary process step such as might be necessary for the deposition of an additional photovoltaic or electrochromic layer. Moreover, these layers are not resistant to a thermal treatment such as tempering or bending. When a substrate of glass covered with such a layer is subjected to a thermal treatment in air in the order of 500 to 650°C, a degradation in conductivity has been observed as well as the appearance of optical faults such as whitish specks etc.

Therefore, there is a need to have transparent substrates, in particular of mineral glass, which are covered with a conductive layer (serving as an electrode or as a heating resistor coating) deposited by a vacuum process and are resistant to thermal and chemical treatments. Advantageously, such layers have the lowest possible electrical resistance while preserving the appropriate optical properties (such as, for example, homogeneous high light transmission (LT) (in particular higher than 30%), low light reflection (LR)).

Therefore, what is sought is a covering with a good conductivity while retaining a high light transmission (LT). For applications such as windscreens, LT values higher than 70%, and even 75% are necessary. For applications such as vehicle rear windows, lower LT values (to 30-35%, for example) are acceptable. For applications such as electrodes in a photovoltaic or electrochromic cell, the highest possible LT values are sought ( >80%).

Since resistance is a function of resistivity (ρ) and thickness (e) of the conductive layer (R = p / e), the temptation might be to greatly increase the thickness of the conductive layer in order to reduce resistance. However, for economic reasons and because of the light transmission, the covering must retain reasonable thicknesses.

It has surprisingly been found that it is possible to obtain layers deposited by a vacuum process that retain a low sheet resistance or decrease their sheet resistance even after thermal and/or chemical treatment by applying at least one protective over-layer of metal oxide, nitride or oxynitride.

The present invention relates to a transparent substrate, in particular made of glass, covered with a stack of layers, said stack comprising the following prior to thermal treatment:
a sub-layer selected from the oxides, nitrides and oxynitrides of titanium, aluminium, silicon, zinc, tin, indium, molybdenum, bismuth, tantalum, cerium, niobium, zirconium or tungsten,
at least one metal oxide-based conductive layer deposited by a vacuum process, in particular by magnetron sputtering, having a thickness in the range of between 400 and 1100 nm and comprising zinc oxide doped with one or more elements, in particular selected from aluminium, fluorine, gallium, tin, indium, and
at least one chemical or mechanical protective layer capable of maintaining a low sheet resistance or even decreasing the sheet resistance after thermal and/or chemical treatment, having a thickness in the range of between 20 and 180 nm, and as deposited selected from the oxynitride and nitride of aluminium or from ZnSnOx.

The term thermal treatment should be understood to mean any treatment of the tempering or bending type (in the order of 500-700°C), but also treatments involving temperatures in the order of 250 to 350°C.

The term chemical treatment refers to natural ageing, the action of detergents, the effect of a plasma or any kind of chemical reaction induced in the purpose of surface functionalisation or of deposition of subsequent layers, etc.

Advantageously, the conductivity is further improved by adding between the conductive layer and the protective layer a fine metallic or essentially metallic layer or a nitride layer, e.g. of aluminium, silicon, zirconium or chromium nitride.

Moreover, the chemical resistance of the stack can be improved by adding a final metallic layer. The layer is sufficiently fine to be able to oxidise during the thermal treatment and sufficiently thick to ensure a good chemical resistance of the stack.

Advantageously, the metal oxide of the conductive layer is in a sub-stoichiometric state and is doped. The conductive layer contains zinc oxide doped with one or more elements, in particular selected from aluminium, fluorine, gallium, tin, indium.

The atomic concentration of doping element in the conductive layer is 0.1 %at. minimum and preferably in the range of between 0.5 and 12%, and more preferred between 1 and 3%.

The thickness of the conductive layer is in the range of between 400 and 1100 nm. The thickness of the fine metallic layer itself is advantageously in the range of between 0.5 and 25 nm, preferably between 1 and 15 nm, and further preferred between 1.5 and 10 nm. The metallic layer must in fact be sufficiently fine for it to oxidise virtually completely during the thermal treatment, while being sufficiently significant to ensure protection of the conductive layer.

The metallic element of the fine metallic layer as deposited is selected from Ti, Ni, Cr, Zn, Sn, Si, Zr, Al, In, Nb, Ta, Ce, Bi, Hf, Fe and alloys of these elements. However, other metallic elements could also be considered, in particular any elements whose oxidation provides a stable, resistant oxidised form capable of withstanding corrosive atmospheres.

The protective layer as deposited is selected from the nitrides and oxynitrides of aluminium, or from ZnSnOx. The nature of the layer can be modified after deposition. It has in fact been noted that it partially or completely oxidises during annealing.

Any other protective layers capable of resisting detergents, atmospheric conditions, exposure to particular chemical conditions (e.g. oxidising, reductive, acidic or basic environment) and/or mechanical degradation could also be considered.

The thickness of the protective layer is in the range of between 20 and 180 nm, preferably between 35 and 100 nm.

The layered stack comprises a sub-layer selected from the oxides, nitrides and oxynitrides of titanium, aluminium, silicon, zinc, tin, indium, molybdenum, bismuth, tantalum, cerium, niobium, zirconium or tungsten. The purpose of this sub-layer in particular is to protect the conductive layer from the migration of elements contained in the glass such as oxygen, alkaline ions etc.

The present invention also relates to a process for the production of a transparent substrate covered with a conductive stack, characterised by the following steps:
a) a sub-layer is deposited which is selected from the oxides, nitrides and oxynitrides in particular of titanium, aluminium, silicon, zinc, tin, indium, molybdenum, bismuth, tantalum, cerium, niobium, zirconium tungsten,
b) a metal oxide-based conductive layer, having a thickness in the range of between 400 and 1100 nm and comprising zinc oxide doped with one or more elements, in particular selected from aluminium, fluorine, gallium, tin, indium, is deposited using a vacuum deposition process;
c) a protective layer having a thickness in the range of between 20 and 180 nm, selected from oxynitrides and nitrides of aluminium or from ZnSnOx, is deposited by a vacuum deposition process;
d) the substrate is subjected to a thermal treatment in particular tempering, bending, or annealing at high temperature, which, amongst other effects, modifies the crystalline structure of the conductive layer and allows its conductivity to increase.

Advantageously, a sub-layer such as described above is also deposited. Advantageously, a fine metallic layer is deposited between the conductive layer and the protective layer.

The deposition technique is advantageously a magnetron sputtering process.
In particular, the conductive layer is deposited by regulating the conditions of gas mixtures and being positioned in the metal-reactive transition zone so that a layer oxidised in a sub-stoichiometric form is obtained.

The present invention also relates to a process for the production of any system comprising a transparent substrate coated with a transparent conductive layer acting as an electrode (e.g. photovoltaic or electrochromic cell, liquid crystal display, ...), characterised by the following steps:
a) a sub-layer selected from the oxides, nitrides and oxynitrides of titanium, aluminium, silicon, zinc, tin, indium, molybdenum, bismuth, tantalum, cerium, niobium, zirconium tungsten, is deposited on a transparent substrate;
b) a metal oxide-based conductive layer, having a thickness in the range of between 400 and 1100 nm and comprising zinc oxide doped with one or more elements, in particular selected from aluminium, fluorine, gallium, tin, indium, is deposited using a vacuum deposition process;
c) a protective layer having a thickness in the range of between 20 and 180 nm, selected from oxynitrides and nitrides of aluminium or from ZnSnOx is deposited;
c) a functional layer able to be activated through the conductive layer is deposited;
d) a back electrode is applied.

The present invention also relates to the use as heating glazing of a transparent substrate such as that described in the present application and/or according to the process described in the present application. By using appropriate electrical connectors, the substrate described above can be included in the production of a glazing suited for demisting and de-icing, or even heating, e.g. in architectural applications.

The present invention also relates to the use of a substrate covered as described in the present application in the production of photovoltaic, electrochromic cells or liquid crystal displays.

The subject of the present invention is further extended to glazing units comprising a substrate covered with a layered arrangement comprising at least one metal oxide-based conductive layer deposited by a vacuum process, which has a sheet resistance of less than 60 ohm per square, preferably less than 55 ohm/square and further preferred less than 35 or even 15 ohm/square.

According to some methods, this resistance is combined with a high light transmission (higher than 70%, preferably higher than 75 or even 80%). According to other methods, light transmission values of more than 30 or even 35% are sought. This is the case in particular when a coloured transparent substrate is used.

Other applications may also be considered for the described substrate, e.g. in the field of touch-sensitive screens and electromagnetic filters for screens.

The present invention is illustrated in a non-restrictive manner by the practical examples below.

### Example 1:

A stack of glass / AIN / ZnO:Al / Ti / AIN was formed by magnetron sputtering on a substrate of clear soda-lime mineral glass with a thickness of 2 mm. Thermal treatment tests at different temperatures and ageing tests were then conducted.

The conditions of deposition of different layers forming the layered arrangement are as follows.

A first layer of aluminium nitride was deposited on the substrate starting from an aluminium target in an atmosphere of pure nitrogen. The current applied was 4 amperes for a voltage of 300 volts. The pressure was 5 mtorr. The thickness of the deposit was in the order of 900 Å.

The conductive layer of zinc oxide doped with aluminium was formed from a single target of 2% Al doped zinc in an argon-oxygen atmosphere in order to obtain the necessary sub-stoichiometry. The sub-stoichiometry was obtained by operating the sputtering in the metal-reactive transition zone. The introduction of gas was controlled by a piezoelectric control system regulated by a control loop which utilises the light emission of the plasma. The reference signal used in this case was the emission line of the zinc at 215 nm. A continuous layer was formed with a thickness in the order of 5000 Å.

A layer of titanium was deposited in pure argon. The current was 4 amp for a voltage of 295 v and a pressure of 5 mtorr. The thickness of the layer was in the order of 50 Å.

A second layer of aluminium nitride was deposited in a similar manner to the first. The deposit thickness was in the order of 900 Å.

The substrate was then subjected to various annealing steps in air at 650°C for 10 minutes on a metal support with a minimum bearing capacity to allow the glass to deform. These annealing steps simulate a thermal treatment such as tempering or bending.

The conductivity measurements were conducted using the four-point method and the transmission was determined by spectrophotometer. The conductive layer had a resistivity of 5.10⁻⁴ ohm.cm. The resistance measured was 10 ohm/square.
The light transmission was in the order of 80%.

### Example 2: (comparative example)

A layered arrangement identical to that in Example 1 was formed with the exception that the thickness of the conductive layer was 10 000 Å. In this case, the resistivity of the conductive layer was 4.10⁻⁴ ohm.cm. The resistance was 4 ohm/square. The light transmission was 79%.

The treated samples were meticulously examined to detect any faults before and after annealing. During the annealing processes at temperatures not exceeding 650°C, the samples did not exhibit any visually discernible optical degradations.

In the case of a stack consisting of glass / AIN / ZnO:Al (without protective layer), a similar heat treatment at 650°C has lead to a dramatic deterioration of conductivity, the film becoming insulating.

### Example 3:

A layered arrangement was formed with a stack of glass / AIN / ZnO:Al / Ti / AINO by magnetron sputtering on a substrate of clear soda-lime mineral glass with a thickness of 2 mm. The only difference between this stack and the one described in example1 is the nature of the protective layer. In the present case, the protective layer consists in an aluminium oxynitride prepared by pulsed magnetron sputtering with a gas mixture of 65% Ar, 30% N2 and 5% 02.
Thermal treatment tests were then conducted, in particular, at a temperature of 350°C during 15 minutes under atmospheric conditions. The average sheet resistance was 22 ohm/square with a light transmission of 52%. At higher temperatures of thermal treatment, the sheet resistance was observed to drop and the light transmission to increase. Values of 10 ohm/square with a light transmission of 81 % could be reached at 650°C.

### Example 4:

In an other embodiment of the present invention, the conductive oxide in the following stack is protected by an oxide layer : glass / ZnSnOx (600Å) / ZnO:Al (8000A) / Ti (90Å) / ZnSnOx (800A). The ZnSnOx material is an oxide obtained from sputtering a Zinc 52 _{atomic}% / Sn 48 _{atomic}% target in a pure oxygen atmosphere. ZnO:Al and Ti are deposited as explained above.

After thermal treatment at 670°C, the sheet resistance measured was 9 ohm/square and the LT reached 75%.

### Example 5 (reference example)

Another example in the scope of the present invention is illustrated by the following stack : glass / AIN (500A) / ITO (3200A) / Zn (40A) / Si₃N₄ (550Å) in comparison with the following unprotected stack : glass / AIN (500Å) / ITO (3200A). The sheet resistance of both the protected and the unprotected stack is 13 ohm/square.
Both systems have been mounted as heating elements consisting in 4 mm glasses covered with the stacks described above and equipped with copper strip connectors, the conductive coating acting as a heating resistor through which electrical current is passed. The current was tuned to reach a temperature of 150°C on the surface of the glasses. After 50hours of operation at 150°C, the sheet resistance of the unprotected stack had increased by a factor of about 2.3 while the sheet resistance of the protected stack had not changed.

In reality, it is surprising to obtain a substrate covered with a conductive oxide layer deposited by a vacuum deposition process that is capable of being heat treated at temperatures up to 700°C. Such substrates have never been obtained to date.

It is also surprising that the addition of a metallic or partially metallic, and therefore absorbent, layer enables a transparent layered arrangement to be retained after thermal treatment. In fact, it has been found that the outer protective layer oxidises during annealing. It has also been found that the metal oxide layer likewise oxidises as a result of the thermal treatment. However, the conductive layer does not deteriorate during the thermal treatment, this even increasing its conductivity. Unexpectedly, the outer layers do not affect the transparency of the layered arrangement after thermal treatment and in spite of everything assures a barrier function to the oxygen during the thermal treatment.

## Claims

1. Transparent substrate, in particular made of glass, covered with a stack of layers, said stack comprising the following on deposition:
a sub-layer selected from the oxides, nitrides and oxynitrides of titanium, aluminium, silicon, zinc, tin, indium, molybdenum, bismuth, tantalum, cerium, niobium, zirconium or tungsten,
a metal oxide-based conductive layer deposited by a vacuum-type process having a thickness in the range of between 400 and 1100 nm and comprising zinc oxide doped with one or more elements, in particular selected from aluminium, fluorine, gallium, tin, indium, and
a protective layer capable of maintaining or increasing the conductivity of the conductive layer after thermal and/or chemical treatment, having a thickness in the range of between 20 and 180 nm, and as deposited selected from the oxynitride and nitride of aluminium or ZnSnOx.

2. Substrate according to the preceding claim, **characterised in that** a fine metallic or at least partially metallic layer is deposited between the conductive layer and the protective layer.

3. Substrate according to any of the preceding claims, **characterised in that** the metal oxide is in a sub-stoichiometric state.

4. Substrate according to any one of the preceding claims, **characterised in that** the atomic concentration of doping element in the conductive layer is 0.1% at minimum and preferably in the range of between 0.5 and 12%, and more preferred between 1 and 3%.

5. Substrate according to any one of claims 2 to 4, **characterised in that** the thickness of the fine metallic layer is in the range of between 0.5 and 25 nm, preferably between 1 and 15 nm, and further preferred between 1.5 and 10 nm.

6. Substrate according to any one of claims 2 to 5, **characterised in that** the metallic element of the fine essentially metallic layer as deposited is selected from Ti, Ni, Cr, Zn, Sn, Si, Zr, Al, In, Nb, Ta, Ce, Bi, Hf, Fe and alloys of these elements.

7. Substrate according to any one of Claims 2 to 5, **characterised in that** the fine essentially metallic layer as deposited comprises nitride of Ti, Al, Si, Zr or Cr.

8. Substrate according to any one of the preceding claims, **characterised in that** the thickness of the protective layer is in the range of between 35 and 100 nm.

9. Process for the production of a transparent substrate covered with a conductive layered arrangement, **characterised by** the following steps:
a) a sub-layer is deposited which is selected from the oxides, nitrides and oxynitrides in particular of titanium, aluminium, silicon, zinc, tin, indium, molybdenum, bismuth, tantalum, cerium, niobium, zirconium tungsten;
b) a metal oxide-based conductive layer, having a thickness in the range of between 400 and 1100 nm and comprising zinc oxide doped with one or more elements, in particular selected from aluminium, fluorine, gallium, tin, indium, is deposited using a vacuum-type deposition process;
c) a protective layer having a thickness in the range of between 20 and 180 nm, is deposited which is selected from oxynitride and nitride of aluminium or from ZnSnOx;
d) the substrate is subjected to a thermal treatment such as tempering or bending.

10. Process according to claim 9, **characterised in that** a fine essentially metallic layer is deposited using a vacuum-type deposition process.

11. Process according to any one of Claims 9 to 10, **characterised in that** the deposits are carried out by magnetron-type sputtering.

12. Process according to any one of Claims 9 to 11, **characterised in that** the metal oxide is deposited in a sub-stoichiometric form by magnetron sputtering operated in gas mixtures and in the metal-reactive transition zone.

13. Process for the production of an active system involving a transparent conductive layer as an electrode, **characterised by** the following steps:
a) a sub-layer selected from the oxides, nitrides and oxynitrides of titanium, aluminium, silicon, zinc, tin, indium, molybdenum, bismuth, tantalum, cerium, niobium, zirconium tungsten, is deposited on a transparent substrate
b) a metal oxide-based conductive layer, having a thickness in the range of between 400 and 1100 nm and comprising zinc oxide doped with one or more elements, in particular selected from aluminium, fluorine, gallium, tin, indium, is deposited using a vacuum-type deposition process;
c) a protective layer having a thickness in the range of between 20 and 180 nm, selected from oxynitride and nitride of aluminium or from ZnSnOx is deposited;
d) a functional layer able to be activated through the conductive layer is deposited;
e) a back electrode is applied.

14. Use of a substrate according to any one of Claims 1 to 8 as heating glazing.

15. Use of a substrate according to any one of Claims 1 to 8 as a transparent element serving as electrode.

## Patentansprüche

1. Transparentes Substrat, insbesondere hergestellt aus Glas, bedeckt mit einem Stapel aus Schichten, wobei der Stapel das Folgende nach Ablagerung umfaßt:
Eine Unterschicht, ausgewählt aus den Oxiden, Nitriden und Oxynitriden von Titan, Aluminium, Silicium, Zink, Zinn, Indium, Molybdän, Bismut, Tantal, Cer, Niob, Zirconium oder Wolfram,
eine leitfähige Schicht auf Metalloxidbasis, abgelagert durch ein Verfahren vom Vakuumtyp, welche eine Dicke im Bereich von zwischen 400 und 1100 nm aufweist, und Zinkoxid, welches mit einem oder mehreren Elementen, insbesondere ausgewählt aus Aluminium, Fluor, Gallium, Zinn, Indium geimpft ist, umfaßt, und
eine Schutzschicht, welche befähigt ist, die Leitfähigkeit der leitfähigen Schicht nach thermischer und/oder chemischer Behandlung beizubehalten oder zu erhöhen, welche eine Dicke im Bereich von zwischen 20 und 180 nm aufweist, und abgelagert ausgewählt ist aus den Oxynitriden und Nitriden von Aluminium oder ZnSnOx.

2. Substrat nach dem vorhergehenden Anspruch, **dadurch gekennzeichnet, daß** eine feinmetallische oder zumindest teilweise metallische Schicht zwischen der leitfähigen Schicht und der Schutzschicht abgelagert ist.

3. Substrat nach einem der vorhergehenden Ansprüche, **dadurch gekennzeichnet, daß** das Metalloxid in einem sub-stöchiometrischen Zustand vorliegt.

4. Substrat nach einem der vorhergehenden Ansprüche, **dadurch gekennzeichnet, daß** die Atomkonzentration des Impfelements in der leitfähigen Schicht 0,1 % als Minimum beträgt und vorzugsweise in dem Bereich von zwischen 0,5 und 12%, und mehr bevorzugt zwischen 1 und 3% liegt.

5. Substrat nach einem der Ansprüche 2 bis 4, **dadurch gekennzeichnet, daß** die Dicke der feinmetallischen Schicht im Bereich von zwischen 0,5 und 25 nm, vorzugsweise zwischen 1 und 15 nm, und weiter bevorzugt zwischen 1,5 und 10 nm liegt.

6. Substrat nach einem der Ansprüche 2 bis 5, **dadurch gekennzeichnet, daß** das metallische Element der im wesentlichen feinmetallischen Schicht wie abgelagert ausgewählt ist aus Ti, Ni, Cr, Zn, Sn, Si, Zr, Al, In, Nb, Ta, Ce, Bi, Hf, Fe und Legierungen dieser Elemente.

7. Substrat nach einem der Ansprüche 2 bis 5, **dadurch gekennzeichnet, daß** die im wesentlichen feinmetallische Schicht wie abgelagert Nitrid von Ti, Al, Si, Zr oder Cr umfaßt.

8. Substrat nach einem der vorhergehenden Ansprüche, **dadurch gekennzeichnet, daß** die Dicke der Schutzschicht im Bereich von zwischen 35 und 100 nm liegt.

9. Verfahren zur Herstellung eines transparenten Substrats, bedeckt mit einer leitfähigen beschichteten Anordnung, **gekennzeichnet durch** die folgenden Schritte:
a) Eine Unterschicht wird abgelagert, welche ausgewählt ist aus den Oxiden, Nitriden und Oxynitriden, insbesondere von Titan, Aluminium, Silicium, Zink, Zinn, Indium, Molybdän, Bismut, Tantal, Cer, Niob, Zirconium, Wolfram;
b) eine leitfähige Schicht auf Metalloxidbasis, welche eine Dicke im Bereich von zwischen 400 und 1100 nm aufweist und Zinkoxid, welches mit einem oder mehreren Elementen, insbesondere ausgewählt aus Aluminium, Fluor, Gallium, Cer, Indium geimpft ist, umfaßt, wird unter Verwendung eines Ablagerungsverfahrens vom Vakuumtyp abgelagert;
c) eine Schutzschicht mit einer Dicke im Bereich von zwischen 20 und 180 nm, welche ausgewählt ist aus Oxynitrid und Nitrid von Aluminium oder von ZnSnOx, wird abgelagert;
d) das Substrat wird einer thermischen Behandlung wie Tempern oder Biegen unterzogen.

10. Verfahren nach Anspruch 9, **dadurch gekennzeichnet, daß** eine im wesentlichen feinmetallische Schicht unter Verwendung eines Ablagerungsverfahrens vom Vakuumtyp abgelagert wird.

11. Verfahren nach einem der Ansprüche 9 bis 10, **dadurch gekennzeichnet, daß** die Ablagerungen durch Sputtern vom Magnetron-Typ durchgeführt werden.

12. Verfahren nach einem der Ansprüche 9 bis 11, **dadurch gekennzeichnet, daß** das Metalloxid in einer sub-stöchiometrischen Form durch Magnetronsputtern, betrieben in Gasgemischen und in der Metall-reaktiven Übergangszone, abgelagert wird.

13. Verfahren zur Herstellung eines aktiven Systems, welches eine transparente leitfähige Schicht als eine Elektrode einschließt, **gekennzeichnet durch** die folgenden Schritte:
a) Eine Unterschicht, ausgewählt aus den Oxiden, Nitriden und Oxynitriden von Titan, Aluminium, Silicium, Zink, Zinn, Indium, Molybdän, Bismut, Tantal, Cer, Niob, Zirconium, Wolfram wird auf ein transparentes Substrat abgelagert;
b) eine leitfähige Schicht auf Metalloxidbasis, welche eine Dicke in dem Bereich von zwischen 400 und 1100 nm aufweist, und Zinkoxid, welches mit einem oder mehreren Elementen, insbesondere ausgewählt aus Aluminium, Fluor, Gallium, Zinn, Indium geimpft ist, umfaßt, wird unter Verwendung eines Ablagerungsverfahrens vom Vakuumtyp abgelagert;
c) eine Schutzschicht mit einer Dicke im Bereich von zwischen 20 und 180 nm, ausgewählt aus Oxynitrid und Nitrid von Aluminium oder von ZnSnOx, wird abgelagert;
d) eine funktionelle Schicht, welche befähigt ist **durch** die leitfähige Schicht aktiviert zu werden, wird abgelagert;
e) eine Rückelektrode wird angebracht.

14. Verwendung eines Substrats nach einem der Ansprüche 1 bis 8 als Wärmeverglasung.

15. Verwendung eines Substrats nach einem der Ansprüche 1 bis 8 als ein transparentes Element, welches als Elektrode dient.

## Revendications

1. Substrat transparent, en particulier en verre, recouvert d'un empilement de couches, ledit empilement comprenant le dépôt des couches suivantes :
une sous-couche sélectionnée parmi les oxydes, nitrures et oxynitrures de titane, d'aluminium, de silicium, de zinc, d'étain, d'indium, de molybdène, de bismuth, de tantale, de cérium, de niobium, de zirconium ou de tungstène,
une couche conductrice à base d'oxyde métallique déposée par un procédé de type sous vide, ayant une épaisseur dans la gamme comprise entre 400 et 1100 nm et comprenant de l'oxyde de zinc dopé avec un ou plusieurs éléments, en particulier sélectionnés parmi l'aluminium, le fluor, le gallium, l'étain, l'indium, et
une couche protectrice capable de maintenir ou d'augmenter la conductibilité de la couche conductrice après un traitement thermique et/ou chimique, ayant une épaisseur dans la gamme comprise entre 20 et 180 nm et telle que déposée sélectionnée parmi l'oxynitrure et le nitrure d'aluminium ou le ZnSnOx.

2. Substrat selon la revendication précédente, **caractérisé en ce qu'**une fine couche métallique ou au moins partiellement métallique est déposée entre la couche conductrice et la couche protectrice.

3. Substrat selon l'une quelconque des revendications précédentes, **caractérisé en ce que** l'oxyde métallique est dans un état sous-stoechiométrique.

4. Substrat selon l'une quelconque des revendications précédentes, **caractérisé en ce que** la concentration atomique de l'élément dopant dans la couche conductrice est de 0,1 % au minimum et de préférence dans la gamme comprise entre 0,5 et 12 % et plus préférablement entre 1 et 3%.

5. Substrat selon l'une quelconque des revendications 2 à 4, **caractérisé en ce que** l'épaisseur de la fine couche métallique est dans la gamme comprise entre 0,5 et 25 nm, de préférence entre 1 et 15 nm, et encore plus préférablement entre 1,5 et 10 nm.

6. Substrat selon l'une quelconque des revendications 2 à 5, **caractérisé en ce que** l'élément métallique de la fine couche essentiellement métallique telle que déposée est sélectionné parmi du Ti, du Ni, du Cr, du Zn, du Sn, du Si, du Zr, de l'Al, de l'In, du Nb, du Ta, du Ce, du Bi, du Hf, du Fe et des alliages de ces éléments.

7. Substrat selon l'une quelconque des revendications 2 à 5, **caractérisé en ce que** la fine couche essentiellement métallique telle que déposée comprend du nitrure de Ti, d'Al, de Si, de Zr ou de Cr.

8. Substrat selon l'une quelconque des revendications précédentes, **caractérisé en ce que** l'épaisseur de la couche protectrice est dans la gamme comprise entre 35 et 100 nm.

9. Procédé pour la production d'un substrat transparent recouvert d'un arrangement de couches conductrices, **caractérisé par** les étapes suivantes :
a) une sous-couche est déposée qui est sélectionnée parmi les oxydes, les nitrures et oxynitrures en particulier de titane, d'aluminium, de silicium, de zinc, d'étain, d'indium, de molybdène, de bismuth, de tantale, de cérium, de niobium, de zirconium ou de tungstène ;
b) une couche conductrice à base d'oxyde métallique, ayant une épaisseur dans la gamme comprise entre 400 et 1100 nm et comprenant de l'oxyde de zinc dopé avec un ou plusieurs éléments, en particulier sélectionnés parmi l'aluminium, le fluor, le gallium, l'étain, l'indium, est déposée à l'aide d'un procédé de dépôt de type sous vide ;
c) une couche protectrice ayant une épaisseur dans la gamme comprise entre 20 et 180 nm est déposée qui est sélectionnée parmi l'oxynitrure et le nitrure d'aluminium ou le ZnSnOx ;
d) le substrat est soumis à un traitement thermique tels que la trempe ou le bombage.

10. Procédé selon la revendication 9, **caractérisé en ce qu'**une fine couche essentiellement métallique est déposée à l'aide d'un procédé de dépôt de type sous vide.

11. Procédé selon l'une quelconque des revendications 9 à 10, **caractérisé en ce que** les dépôts sont réalisés par pulvérisation de type magnétron.

12. Procédé selon l'une quelconque des revendications 9 à 11, **caractérisé en ce que** l'oxyde de métal est déposé sous une forme sous-stoechiométrique par pulvérisation magnétron réalisée dans des mélanges de gaz et dans la zone de transition réactive de dépôt de métal.

13. Procédé de production d'un système actif comprenant une couche conductrice transparente en tant qu'électrode, **caractérisé par** les étapes suivantes :
a) une sous-couche sélectionnée parmi les oxydes, les nitrures et oxynitrures de titane, d'aluminium, de silicium, de zinc, d'étain, d'indium, de molybdène, de bismuth, de tantale, de cérium, de niobium, de zirconium ou de tungstène, est déposée sur un substrat transparent ;
b) une couche conductrice à base d'oxyde métallique, ayant une épaisseur dans la gamme comprise entre 400 et 1100 nm et comprenant de l'oxyde de zinc dopé avec un ou plusieurs éléments, en particulier sélectionnés parmi l'aluminium, le fluor, le gallium, l'étain, l'indium, est déposée à l'aide d'un procédé de dépôt de type sous vide ;
c) une couche protectrice ayant une épaisseur dans la gamme comprise entre 20 et 180 nm sélectionnée parmi l'oxynitrure et le nitrure d'aluminium ou le ZnSnOx est déposée ;
d) une couche fonctionnelle susceptible d'être activée au travers de la couche conductrice est déposée ;
e) une contre-électrode est appliquée.

14. Utilisation d'un substrat selon l'une quelconque des revendications 1 à 8 en tant que vitre chauffante.

15. Utilisation d'un substrat selon l'une quelconque des revendications 1 à 8 en tant qu'élément transparent servant d'électrode.
